# EUROPEAN PATENT APPLICATION

(11) **EP 4 827 142 A1**
(43) Date of publication of application: **21.10.2026**
(21) Application number: 24902404.3
(22) Date of filing: 30.10.2024
(51) Int. Cl.: H04W 12/75

(54) **METHOD AND DEVICE FOR ALLOCATING TEMPORARY IDENTIFIER TO TERMINAL**

(30) Priority: 13.12.2023 CN 202311708317
(71) Applicant: Huawei Technologies Co., Ltd., Shenzhen, Guangdong 518129 (CN)
(72) Inventor: SUN, Fei, Shenzhen, Guangdong 518129 (CN); LOU, Chong, Shenzhen, Guangdong 518129 (CN)
(74) Representative: Huawei European IPR
(86) International application number: PCT/CN2024/128431
(87) International publication number: WO 2025/123980

(57) **Abstract**

A method and an apparatus for allocating a temporary identifier to a terminal are provided. The method includes: An access network device allocates a first temporary identifier to a terminal, and sends a first message to an AMF network element. The first message includes the first temporary identifier. When receiving the first message, the AMF network element obtains a SUPI of the terminal from a UDM network element, and establishes a correspondence between the first temporary identifier and the SUPI of the terminal. Then, the access network device may communicate with a core network element based on the first temporary identifier. In embodiments of this application, the access network device communicates with a core network element based on the first temporary identifier of the terminal, and the core network element may map the first temporary identifier to the SUPI of the terminal. This prevents the access network device from obtaining the SUPI of the terminal, thereby ensuring privacy and security of the terminal.

## Description

### CROSS-REFERENCE TO RELATED APPLICATIONS

This application claims priority to Chinese Patent Application No. 202311708317.6, filed with the China National Intellectual Property Administration on December 13, 2023 and entitled "METHOD AND APPARATUS FOR ALLOCATING TEMPORARY IDENTIFIER TO TERMINAL", which is incorporated herein by reference in its entirety.

### TECHNICAL FIELD

This application relates to the field of communications technologies, and in particular, to a method and an apparatus for allocating a temporary identifier to a terminal.

### BACKGROUND

In an N2 interface architecture, an access network device can access other control-plane core network elements only by using an access and mobility management function (access and mobility management function, AMF) network element as a relay. In an N2 interface service-based architecture, an access network device can access each core network element in a single hop. A core network element can identify a terminal only by using a subscription permanent identifier (subscription permanent identifier, SUPI) of the terminal. If an access network device obtains a SUPI of a terminal, the access network device communicates with a core network element based on the SUPI of the terminal. In this case, if the access network device is untrusted, leakage of the terminal's private information may be incurred, posing a security risk to the terminal.

### SUMMARY

Embodiments of this application provide a method and an apparatus for allocating a temporary identifier to a terminal, so that a temporary identifier is allocated to a terminal. This prevents an access network device from obtaining a SUPI of the terminal, thereby ensuring privacy and security of the terminal.

According to a first aspect, a method for allocating a temporary identifier to a terminal is provided. The method is applied to an access network device and includes: allocating a first temporary identifier to a terminal; and sending a first message to an access and mobility management function network element, where the first message includes the first temporary identifier, and the first temporary identifier is used to identify the terminal in a message sent by the access network device to a first core network element.

With the foregoing design, the access network device allocates the first temporary identifier to the terminal, the AMF network element may allocate a second temporary identifier to the terminal, and the access network device communicates with the first core network element based on the first temporary identifier and the second temporary identifier. This can prevent the access network device from obtaining a SUPI of the terminal, thereby ensuring privacy and security of the terminal.

In a possible design, the first temporary identifier is further used to identify the terminal in a message sent by the first core network element to the access network device.

In a possible design, the method further includes: receiving a second message from the access and mobility management function network element, where the second message includes a second temporary identifier of the terminal, and the second temporary identifier is used to identify the terminal in a message sent by the first core network element to the access network device.

In a possible design, the method further includes: sending a third message to the first core network element, where the third message includes the first temporary identifier; and receiving a fourth message from the first core network element, where the fourth message includes the first temporary identifier or the second temporary identifier.

In a possible design, the third message further includes identification information of the access and mobility management function network element.

According to a second aspect, a method for allocating a temporary identifier to a terminal is provided. The method is applied to an access and mobility management function network element and includes: receiving a first message from an access network device, where the first message includes a first temporary identifier of a terminal, and the first temporary identifier is used to identify the terminal in a message sent by the access network device to a first core network element.

In a possible design, the first temporary identifier is further used to identify the terminal in a message sent by the first core network element to the access network device.

In a possible design, the method further includes: allocating a second temporary identifier to the terminal, where the second temporary identifier is used to identify the terminal in a message sent by the first core network element to the access network device; and sending a second message to the access network device, where the second message includes the second temporary identifier.

In a possible design, the method further includes: sending a fifth message to the first core network element, where the fifth message includes a subscription permanent identifier SUPI of the terminal and the first temporary identifier. Optionally, the fifth message further includes the second temporary identifier. Optionally, the fifth message further includes identification information of the access network device that allocates the first temporary identifier.

With the foregoing design, the AMF network element configures a correspondence between a temporary identifier of the terminal and the SUPI of the terminal for the first core network element. When receiving a message from the access network device, the first core network element may obtain the temporary identifier included in the message, and map the temporary identifier to the SUPI of the terminal. The first core network element may communicate with the access network device by using the temporary identifier of the terminal, and the first core network element may map the temporary identifier of the terminal to the SUPI of the terminal. This prevents the access network device from obtaining the SUPI of the terminal, thereby ensuring privacy and security of the terminal.

In a possible design, the method further includes: receiving a request message from the first core network element, where the request message includes the first temporary identifier; determining a SUPI of the terminal based on a correspondence between the first temporary identifier and the SUPI of the terminal; and sending a response message to the first core network element, where the response message includes the SUPI of the terminal.

With the foregoing design, when receiving a message from the access network device, the first core network element may obtain a temporary identifier of the terminal from the message, and send the temporary identifier to the AMF network element, to request the SUPI, of the terminal, corresponding to the temporary identifier from the AMF network element. The AMF network element sends the SUPI of the terminal to the first core network element, so that the first core network element communicates with the access network device by using the temporary identifier of the terminal. This prevents the access network device from obtaining the SUPI of the terminal, thereby ensuring privacy and security of the terminal.

In a possible design, the correspondence between the first temporary identifier and the SUPI of the terminal includes a correspondence between the first temporary identifier, identification information of the access network device that allocates the first temporary identifier, and the SUPI of the terminal. Optionally, the request message further includes the identification information of the access network device that allocates the first temporary identifier.

In a possible design, the correspondence between the first temporary identifier and the SUPI of the terminal includes a correspondence between the first temporary identifier, the second temporary identifier, and the SUPI of the terminal. Optionally, the request message further includes the second temporary identifier.

In a possible design, the correspondence between the first temporary identifier, the second temporary identifier, and the SUPI of the terminal includes: a correspondence between the first temporary identifier, the second temporary identifier, identification information of the access network device that allocates the first temporary identifier, and the SUPI of the terminal. Optionally, the request message further includes the identification information of the access network device that allocates the first temporary identifier.

According to a third aspect, a communication method is provided. The third aspect is a corresponding method for the first aspect and the second aspect. For beneficial effects of the third aspect, refer to the description of the first aspect. The method is applied to a first core network element and includes: receiving a third message from an access network device, where the third message includes a first temporary identifier of a terminal, and the first temporary identifier is used to identify the terminal in a message sent by the access network device to the first core network element; and sending a fourth message to the access network device, where the fourth message includes the first temporary identifier or a second temporary identifier.

In a possible design, when the fourth message includes the first temporary identifier, the first temporary identifier is further used to identify the terminal in a message sent by the access network device to the first core network element.

In a possible design, when the fourth message includes the second temporary identifier, the second temporary identifier is used to identify the terminal in a message sent by the first core network element to the access network device.

In a possible design, the method further includes: determining a subscription permanent identifier SUPI of the terminal based on a correspondence between the first temporary identifier and the SUPI of the terminal.

In a possible design, the method further includes: receiving a fifth message from an access and mobility management function network element, where the fifth message includes the SUPI of the terminal and the first temporary identifier; and determining the correspondence between the first temporary identifier and the SUPI of the terminal.

In a possible design, the correspondence between the first temporary identifier and the SUPI of the terminal includes a correspondence between the first temporary identifier, identification information of the access network device that allocates the first temporary identifier, and the SUPI of the terminal.

In a possible design, the fifth message further includes the identification information of the access network device that allocates the first temporary identifier.

In a possible design, the correspondence between the first temporary identifier and the SUPI of the terminal includes a correspondence between the first temporary identifier, the second temporary identifier, and the SUPI of the terminal.

In a possible design, the fifth message further includes the second temporary identifier.

In a possible design, the correspondence between the first temporary identifier, the second temporary identifier, and the SUPI of the terminal includes: a correspondence between the first temporary identifier, the second temporary identifier, identification information of the access network device that allocates the first temporary identifier, and the SUPI of the terminal.

In a possible design, the fifth message further includes the identification information of the access network device that allocates the first temporary identifier.

In a possible design, the third message further includes identification information of an access and mobility management function network element, and the method further includes: sending a request message to the access and mobility management function network element based on the identification information of the access and mobility management function network element, where the request message includes the first temporary identifier; and receiving a response message from the access and mobility management function network element, where the response message includes a SUPI of the terminal.

In a possible design, the request message further includes identification information of the access network device that allocates the first temporary identifier.

In a possible design, the response message further includes the first temporary identifier of the terminal.

In a possible design, the request message and the response message further include the second temporary identifier.

According to a fourth aspect, a method for allocating a temporary identifier to a terminal is provided. The method is applied to a second core network element and includes: receiving a sixth message from an access network device, where the sixth message includes a third temporary identifier of a terminal, and the third temporary identifier is used to identify the terminal in a message sent by the access network device to the second core network element; and sending a seventh message to the access network device after the terminal succeeds in network security authentication, where the seventh message includes a fourth temporary identifier, and the fourth temporary identifier is used to identify the terminal in a message sent by the second core network element to the access network device.

With the foregoing design, the access network device allocates the third temporary identifier to the terminal, the second core network element allocates the fourth temporary identifier to the terminal, and the access network device communicates with the second core network element based on the third temporary identifier and the fourth temporary identifier. This can prevent the access network device from obtaining a SUPI of the terminal, thereby ensuring privacy and security of the terminal.

According to a fifth aspect, a method for allocating a temporary identifier to a terminal is provided. The fifth aspect is a corresponding method for the fourth aspect. For beneficial effects of the fifth aspect, refer to the description of the fourth aspect. The method is applied to an access network device and includes: sending a sixth message to a second core network element, where the sixth message includes a third temporary identifier of a terminal, and the third temporary identifier is used to identify the terminal in a message sent by the access network device to the second core network element; and receiving a seventh message from the second core network element after the terminal succeeds in network security authentication, where the seventh message includes a fourth temporary identifier, and the fourth temporary identifier is used to identify the terminal in a message sent by the second core network element to the access network device.

According to a sixth aspect, an apparatus is provided. The apparatus can implement the method according to the first aspect or the fifth aspect. For example, the apparatus includes a corresponding means (means) for performing the first aspect or the fifth aspect. The apparatus may be implemented by hardware, implemented by software, or implemented by hardware executing corresponding software.

In a possible design, the apparatus includes a unit for performing the first aspect or the fifth aspect.

In a possible design, the apparatus includes a processor, and the processor is configured to perform the method according to the first aspect or the fifth aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to the first aspect or the fifth aspect through a logic circuit or by executing code instructions.

In a possible design, the apparatus includes a processor and a memory. The processor is configured to execute a computer program or instructions stored in the memory, so that the apparatus implements the method according to the first aspect or the fifth aspect.

Optionally, the apparatus may be a first apparatus, or may be a module or a unit (for example, a chip, a chip system, or a circuit) that is in the first apparatus and that is in a one-to-one correspondence with the method/operation/step/action described in the first aspect or the fifth aspect, or may be used in conjunction with the first apparatus.

According to a seventh aspect, an apparatus is provided. The apparatus can implement the method according to the third aspect or the fourth aspect. For example, the apparatus includes a corresponding means (means) for performing the third aspect or the fourth aspect. The apparatus may be implemented by hardware, implemented by software, or implemented by hardware executing corresponding software.

In a possible design, the apparatus includes a unit for performing the third aspect or the fourth aspect.

In a possible design, the apparatus includes a processor, and the processor is configured to perform the method according to the third aspect or the fourth aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to the third aspect or the fourth aspect through a logic circuit or by executing code instructions.

In a possible design, the apparatus includes a processor and a memory. The processor is configured to execute a computer program or instructions stored in the memory, so that the apparatus implements the method according to the third aspect or the fourth aspect.

Optionally, the apparatus may be a second apparatus, or may be a module or a unit (for example, a chip, a chip system, or a circuit) that is in the second apparatus and that is in a one-to-one correspondence with the method/operation/step/action described in the third aspect or the fourth aspect, or may be used in conjunction with the second apparatus.

According to an eighth aspect, an apparatus is provided. The apparatus can implement the method according to the second aspect. For example, the apparatus includes a corresponding means (means) for performing the second aspect. The apparatus may be implemented by hardware, implemented by software, or implemented by hardware executing corresponding software.

In a possible design, the apparatus includes a unit for performing the second aspect.

In a possible design, the apparatus includes a processor, and the processor is configured to perform the method according to the second aspect.

In a possible design, the apparatus includes a processor and an interface circuit. The interface circuit is configured to: receive a signal from an apparatus other than the apparatus and transmit the signal to the processor, or send a signal from the processor to an apparatus other than the apparatus. The processor is configured to implement the method according to the second aspect through a logic circuit or by executing code instructions.

In a possible design, the apparatus includes a processor and a memory. The processor is configured to execute a computer program or instructions stored in the memory, so that the apparatus implements the method according to the second aspect.

Optionally, the apparatus may be a third apparatus, or may be a module or a unit (for example, a chip, a chip system, or a circuit) that is in the third apparatus and that is in a one-to-one correspondence with the method/operation/step/action described in the second aspect, or may be used in conjunction with the third apparatus.

According to a ninth aspect, a computer-readable storage medium is provided, and stores a computer program or instructions. When the computer program or the instructions are run on a computer, the computer is enabled to implement the method according to any one of the first aspect to the fifth aspect.

According to a tenth aspect, a computer program product is provided, and includes a computer program or instructions. When the computer program or the instructions are run by a computer, the method according to any one of the first aspect to the fifth aspect is performed.

According to an eleventh aspect, a chip is provided, and includes a processor. The processor is coupled to a memory, and is configured to execute a computer program or instructions stored in the memory, so that the chip implements the method according to any one of the first aspect to the fifth aspect.

According to a twelfth aspect, a communication system is provided, and includes a first communication apparatus and a second communication apparatus. The first communication apparatus is configured to implement the method according to the first aspect, and the second communication apparatus is configured to implement the method according to the third aspect. Optionally, the communication system further includes the second communication apparatus configured to implement the method according to the second aspect. Alternatively, the first communication apparatus is configured to implement the method according to the fourth aspect, and the second communication apparatus is configured to implement the method according to the fifth aspect.

### BRIEF DESCRIPTION OF DRAWINGS

FIG. 1 is a diagram of an architecture of a communication system according to an embodiment of this application;
FIG. 2 shows an N2 interface architecture according to an embodiment of this application;
FIG. 3 shows an N2 interface service-based architecture according to an embodiment of this application;
FIG. 4 is a schematic flowchart according to an embodiment of this application;
FIG. 5 and FIG. 6 each are a schematic flowchart of a specific implementation of the schematic flowchart shown in FIG. 4;
FIG. 7 is another schematic flowchart according to an embodiment of this application;
FIG. 8 is a schematic flowchart of a specific implementation of the schematic flowchart shown in FIG. 7; and
FIG. 9 and FIG. 10 each are a diagram of a structure of an apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method, a function description, and the like in a method embodiment may also be applied to an apparatus embodiment or a system embodiment.

Various numbers and terms such as "first" and "second" in embodiments of this application are merely used for differentiation for ease of description, but are not intended to limit the scope of the embodiments of this application. Sequence numbers of the foregoing processes do not mean an execution sequence, and the execution sequence of the processes should be determined based on functions and internal logic of the processes.

In embodiments of this application, unless otherwise specified, a quantity of nouns represents "a singular noun or a plural noun", that is, "one or more". "At least one" means one or more, and "a plurality of" means two or more. A term "and/or" describes an association relationship between associated objects, and indicates that three relationships may exist. For example, "A and/or B" may indicate the following three cases: A exists alone, both A and B exist, and B exists alone, where A and B may be singular or plural.

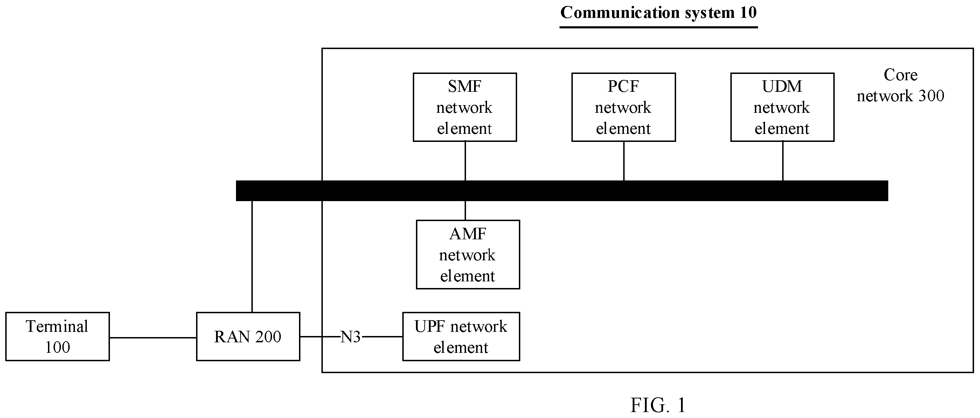

FIG. 1 is a diagram of a possible and non-limiting system. As shown in FIG. 1, a communication system 10 includes a terminal 100, a radio access network (radio access network, RAN) 200, and a core network (core network, CN) 300.

The terminal 100 may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer with a wireless transceiver function, a wearable device, a vehicle, an unmanned aerial vehicle, a helicopter, an airplane, a ship, a robot, a robot arm, a smart home device, or the like. A device form of the terminal is not limited in embodiments of this application.

The RAN 200 includes at least one RAN node. The terminal 100 may be connected to the RAN node in a wireless manner. The RAN node is connected to the core network 300 in a wireless or wired manner. A core network device in the core network 300 and the RAN node in the RAN 200 may be different physical devices, or may be a same physical device that integrates a logical function of the core network device and a logical function of a radio access device.

The RAN 200 may be a cellular system related to a 3rd generation partnership project (3rd generation partnership project, 3GPP), for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 200 may alternatively be an open access network (open RAN, O-RAN, or ORAN), a cloud radio access network (cloud radio access network, CRAN), or a wireless fidelity (wireless fidelity, Wi-Fi) system. The RAN 200 may alternatively be a communication system that integrates two or more of the foregoing systems.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some of functions of the RAN node in embodiments of this application may alternatively be implemented by using a software function running on hardware, or may be implemented by using a virtualization function instantiated on a platform (for example, a cloud platform). The RAN node in embodiments of this application may alternatively be a logical node, a logical module, or software that can implement all or some of functions of the RAN node.

In another possible scenario, a plurality of RAN nodes coordinate to assist a terminal in implementing radio access, and different RAN nodes separately implement some of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node sometimes may also be referred to as an access network device, a RAN entity, an access node, or the like, and constitutes a part of the communication system, to help a terminal implement radio access. In subsequent descriptions of this application, unless otherwise specified, "access network device" is used for description. A plurality of RAN nodes in the RAN 200 may be nodes of a same type, or may be nodes of different types. In an access network service-based architecture, "access network device" may also be replaced with an access network function (access network function, ANF) network element.

The core network 300 includes one or more core network elements. For example, as shown in FIG. 1, the core network 300 includes: a data plane function network element, for example, a user plane function (user plane function, UPF) network element; and control plane function network elements, for example, an access and mobility management function (access and mobility management function, AMF) network element, a session management function (session management function, SMF) network element, a policy control function (policy control function, PCF) network element, and a unified data management (unified data management, UDM) network element. Optionally, the access and mobility management function network element may also be replaced with an access management function network element or a registration management function network element.

It may be understood that a name of a network element in the core network 300 is not limited. For example, in a 5G communication system, a network element that implements a signaling processing portion is referred to as an AMF network element. In a 6G communication system, a network element that implements the foregoing function may also be referred to as another name or the like. This is not limited. In subsequent descriptions, names of network elements in 5G are mainly used as examples to describe solutions in embodiments of this application. Optionally, the core network 300 may further include another control plane function network element, for example, a network capability exposure function (network exposure function, NEF) network element, an application function (application function, AF) network element, a network slice selection function (network slice selection function, NSSF) network element, an authentication server function (authentication server function, AUSF) network element, a network repository function (network repository function, NRF) network element, a unified data repository function (unified data repository, UDR) network element, a network data analytics function (network data analytics function, NWDAF) network element, or a location management function (location management function, LMF) network element.

It may be understood that the access network device and the core network element may be referred to as communication apparatuses. For example, the access network device may be understood as a communication apparatus having a base station function, and the core network element may be understood as a communication apparatus having a core network function. For example, the AMF network element may be understood as a communication apparatus having an AMF function.

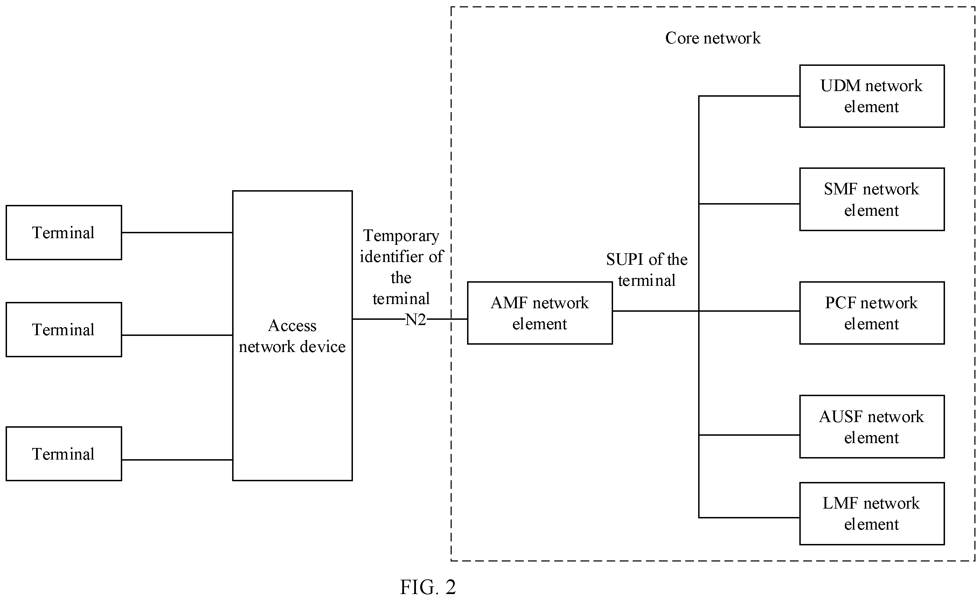

In a network architecture, an interface between an access network device and an AMF network element is an N2 interface. The access network device accesses another core network element with a control plane function by using the AMF network element as a relay. For example, as shown in FIG. 2, an access network device accesses a UDM network element, an SMF network element, a PCF network element, an AUSF network element, an LMF network element, or the like by using an AMF network element as a relay. This network architecture is referred to as an N2 interface architecture. The access network device communicates with the AMF network element based on a temporary identifier of a terminal. In the core network, the AMF network element communicates with another core network element based on a subscription permanent identifier (subscription permanent identifier, SUPI) of the terminal. After the terminal succeeds in security authentication, the AMF network element obtains the SUPI of the terminal from the UDM network element, and the AMF network element establishes a correspondence between the temporary identifier of the terminal and the SUPI of the terminal. In uplink communication, the AMF network element maps the temporary identifier of the terminal to the SUPI of the terminal based on the correspondence between the temporary identifier of the terminal and the SUPI of the terminal. In downlink communication, the AMF network element maps the SUPI of the terminal to the temporary identifier of the terminal based on the correspondence between the temporary identifier of the terminal and the SUPI of the terminal. For example, the access network device requests the LMF network element to perform positioning on the terminal. In a possible implementation, the access network device may send a request message to the AMF network element, where the request message includes the temporary identifier of the terminal. The AMF network element serves as a relay, and maps the temporary identifier of the terminal to the SUPI of the terminal. The AMF network element forwards the request message to the LMF, where the request message includes the SUPI of the terminal. When receiving the request message, the LMF obtains the SUPI of the terminal from the request message. The LMF network element performs positioning on the terminal based on the SUPI of the terminal, to obtain a positioning result. Further, the LMF network element sends the positioning result to the access network device by using the AMF network element as a relay. In a possible implementation, the LMF network element may send the positioning result and the SUPI of the terminal to the AMF network element. The AMF network element may map the SUPI of the terminal to the temporary identifier of the terminal. The AMF network element sends the positioning result and the temporary identifier of the terminal to the access network device. In this solution, the access network device communicates with the AMF network element based on the temporary identifier of the terminal, and the AMF network element communicates with another core network element based on the SUPI of the terminal, so that the access network device cannot obtain the SUPI of the terminal, thereby ensuring privacy and security of the terminal.

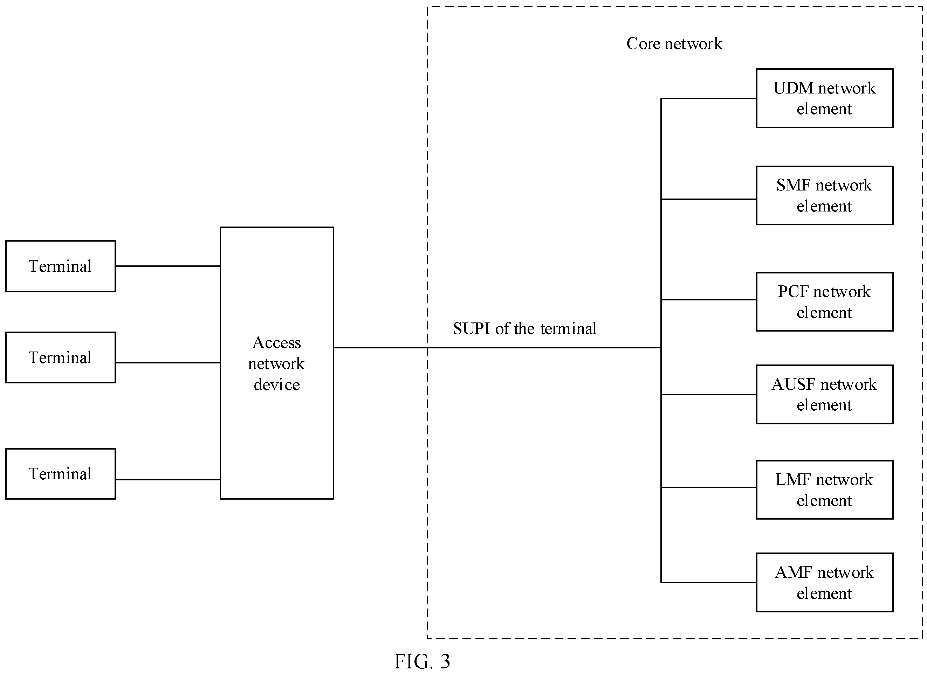

In another network architecture, an access network device can access each core network element in a single hop. To be specific, the access network device directly communicates with the core network element, without relaying and/or forwarding by an AMF network element. For example, as shown in FIG. 1, the access network device may directly communicate with the AMF network element, the SMF network element, the PCF network element, the UDM network element, or the like shown in FIG. 1. Alternatively, as shown in FIG. 3, an access network device may directly communicate with a UDM network element, an SMF network element, a PCF network element, an AUSF network element, an LMF network element, an AMF network element, or the like shown in FIG. 3. The network architecture shown in FIG. 1 or FIG. 3 is referred to as an N2 interface service-based architecture. A core network element identifies a terminal based on a SUPI of the terminal. In a possible implementation, the access network device may obtain the SUPI of the terminal, and communicate with the core network element based on the SUPI of the terminal. For example, a message sent by the access network device to the core network element carries the SUPI of the terminal, and the core network element performs a corresponding operation on the corresponding terminal based on the SUPI of the terminal. If the access network device is untrusted, and the access network device obtains the SUPI of the terminal, leakage of the terminal's private information may be incurred, posing a security risk to the terminal.

In view of this, embodiments of this application provide a method and an apparatus for allocating a temporary identifier to a terminal. The method includes: An access network device allocates a first temporary identifier to a terminal, and sends a first message to an AMF network element. The first message includes the first temporary identifier. When receiving the first message, the AMF network element obtains a SUPI of the terminal from a UDM network element, and establishes a correspondence between the first temporary identifier and the SUPI of the terminal. Then, the access network device may communicate with a core network element based on the first temporary identifier. For example, a message sent by the access network device to the core network element carries the first temporary identifier of the terminal. The core network element maps the first temporary identifier to the SUPI of the terminal based on the correspondence between the first temporary identifier and the SUPI of the terminal. The core network element performs a corresponding operation based on the SUPI of the terminal. In embodiments of this application, the access network device communicates with the core network element based on the first temporary identifier of the terminal, and the core network element may map the first temporary identifier to the SUPI of the terminal. This prevents the access network device from obtaining the SUPI of the terminal, thereby ensuring privacy and security of the terminal.

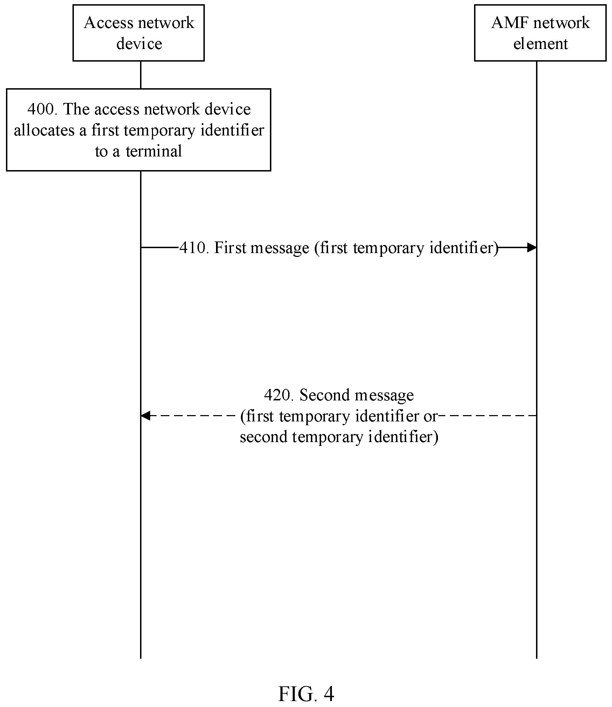

As shown in FIG. 4, an embodiment of this application provides a schematic flowchart, including the following steps.

Step 400: An access network device allocates a first temporary identifier to a terminal.

For example, the terminal is in a radio resource control (radio resource control, RRC) connected state or an inactive (inactive) state. When the access network device exchanges an associated (associated) message of the terminal with the AMF network element for a 1^{st} time, the access network device allocates the first temporary identifier to the terminal.

Step 410: The access network device sends a first message to the AMF network element, and the AMF network element receives the first message from the access network device.

For example, the first message includes the first temporary identifier. When receiving the first message, the AMF network element may trigger a corresponding network element to perform network security verification on the terminal. After the terminal succeeds in the network security verification, the AMF network element may obtain a SUPI of the terminal from a UDM network element. The AMF network element establishes and stores a correspondence between the first temporary identifier and the SUPI of the terminal. Optionally, "correspondence" described in embodiments of this application may be replaced with "association relationship", "mapping relationship", or the like. The first message may be associated information of the terminal that is exchanged between the access network device and the AMF network element for the 1^{st} time. For example, the first message is a registration request message of the terminal, and a second message below is a registration response message for the terminal.

Optionally, because the first temporary identifier is allocated by the access network device, the following case may occur: Different access network devices allocate a same temporary identifier to different terminals. In other words, the first temporary identifier may not uniquely identify one terminal. For unique identification of one terminal, the AMF network element may obtain identification information of the access network device, for example, an identity (identity, ID) of the access network device, a uniform resource locator (uniform resource locator, URL) address of the access network device, or a transport network layer (transport network layer, TNL) address of the access network device. Optionally, the ID of the access device may be reported by the access network device. For example, the first message further includes the ID of the access network device. The AMF network element establishes and stores a correspondence between the first temporary identifier, information about the access network device that allocates the first temporary identifier, and the SUPI of the terminal.

In another possible implementation, after the terminal succeeds in the network security verification, the AMF network element may allocate a second temporary identifier to the terminal. The AMF network element establishes and stores a correspondence between the first temporary identifier, the second temporary identifier, and the SUPI of the terminal. Further, optionally, the AMF network element may further obtain the identification information of the access network device that allocates the first temporary identifier. The AMF network element establishes and stores a correspondence between the first temporary identifier, the second temporary identifier, the identification information of the access network device that allocates the first temporary identifier, and the SUPI of the terminal.

Step 420: The AMF network element sends the second message to the access network device, and the access network device receives the second message from the AMF network element. Step 420 is optional, and the AMF network element may not perform step 420.

For example, the second message is a response message for the first message, and the second message includes the first temporary identifier or the second temporary identifier. Whether the second message includes other information is not limited. For example, when the second message includes the first temporary identifier, the second message may further include the second temporary identifier. Alternatively, when the second message includes the second temporary identifier, the second message may further include the first temporary identifier.

For example, an interface between the AMF network element and the access network device is an N2 interface, and the first message and the second message may be referred to as N2 interface messages associated with the terminal. The first temporary identifier is allocated by the access network device to the terminal. The terminal is represented as UE, the access network device is represented as a CU, and the first temporary identifier may be represented as a UE-CU-specific temporary identifier (specific temp ID). The second temporary identifier is allocated by a core network (CN) element (the AMF network element), and the second temporary identifier may be represented as a UE-CN-specific temporary identifier.

In a possible implementation, the first temporary identifier is used to identify the terminal in a message sent by the access network device to a first core network device. Whether the first temporary identifier is used for another purpose is not limited. For example, the first temporary identifier is further used to identify the terminal in a message sent by the first core network device to the access network device.

For example, in a scenario in which the AMF network element does not allocate the second temporary identifier to the terminal: The first temporary identifier is used to identify the terminal in both an uplink communication process and a downlink communication process. For example, in the uplink communication process, a message sent by the access network device to the first core network element includes the first temporary identifier. The first core network element may determine the SUPI of the terminal based on the first temporary identifier. For a process in which the first core network element determines the SUPI of the terminal, refer to the following descriptions. In the downlink communication process, a message sent by the first core network device to the access network device includes the first temporary identifier. The access network device may identify the terminal based on the first temporary identifier. In this case, optionally, the second message includes the first temporary identifier.

For example, in a scenario in which the AMF network element allocates the second temporary identifier to the terminal: The second temporary identifier is used to identify the terminal in a message sent by the first core network element to the access network device. In other words, the second temporary identifier is used to identify the terminal in the downlink communication process. In this case, the second message includes the second temporary identifier, to notify the access network device of the second temporary identifier allocated by the AMF network element.

In a possible implementation, the second temporary identifier is further used to identify the terminal in a message sent by the access network device to the first core network element. In other words, the second temporary identifier is used to identify the terminal in both uplink communication and downlink communication. In this case, the first temporary identifier is used to identify the terminal in the uplink communication and the downlink communication. In this case, in the uplink communication process and the downlink communication process, a temporary-identifier pair formed by the first temporary identifier and the second temporary identifier is used to identify the terminal. For example, in the uplink communication process, a message sent by the access network device to the first core network element includes the first temporary identifier and the second temporary identifier. In the downlink communication process, a message sent by the first core network element to the access network device includes the first temporary identifier and the second temporary identifier. In this case, the second message includes the first temporary identifier and the second temporary identifier. When receiving the second message, the access network device establishes and stores a correspondence between the first temporary identifier and the second temporary identifier.

It may be understood that the access network device may include a CU and a DU. "Access network device" in embodiments of this application may be replaced with "CU". For example, the CU allocates the first temporary identifier to the terminal, the CU sends the first message to the AMF network element, and the AMF network element sends the second message to the CU.

For example, "first temporary identifier" or "first temporary identifier and second temporary identifier" in embodiments of this application is valid in a validity area. The validity area may be a public land mobile network (public land mobile network, PLMN), a registration area (registration area, RA), a tracking area (tracking area, TA), or the like of the terminal. A PLMN is used as an example. To be specific, "first temporary identifier" or "first temporary identifier and second temporary identifier" can identify the terminal within a PLMN range of the terminal, and becomes invalid and can no longer identify the terminal outside the PLMN range of the terminal.

It may be understood that an application scenario in embodiments of this application may be as follows: The access network device accesses the first core network element in one hop. In other words, the access network device can directly communicate with the first core network element without forwarding by the AMF network element. Certainly, the solutions in embodiments of this application may be further applied to another scenario. This is not limited. "First core network element" in embodiments of this application may be a core network element other than the AMF network element.

With the foregoing design, the access network device allocates the first temporary identifier to the terminal, the AMF network element may allocate the second temporary identifier to the terminal, and the access network device communicates with the first core network element based on the first temporary identifier and the second temporary identifier. This can prevent the access network device from obtaining the SUPI of the terminal, thereby ensuring privacy and security of the terminal.

The following further describes how the first core network element determines, upon receiving a message from the access network device, the SUPI of the terminal based on the first temporary identifier included in the message.

### [One example]

The AMF network element receives the first message from the access network device, and the AMF network element establishes and stores the correspondence between the first temporary identifier and the SUPI of the terminal. The AMF network element configures the correspondence between the first temporary identifier and the SUPI of the terminal for the first core network element by using a fifth message. When receiving a message from the access network device, the first core network element determines the SUPI of the terminal based on the first temporary identifier included in the message and the correspondence that is configured by the AMF network element and that is between the first temporary identifier and the SUPI of the terminal.

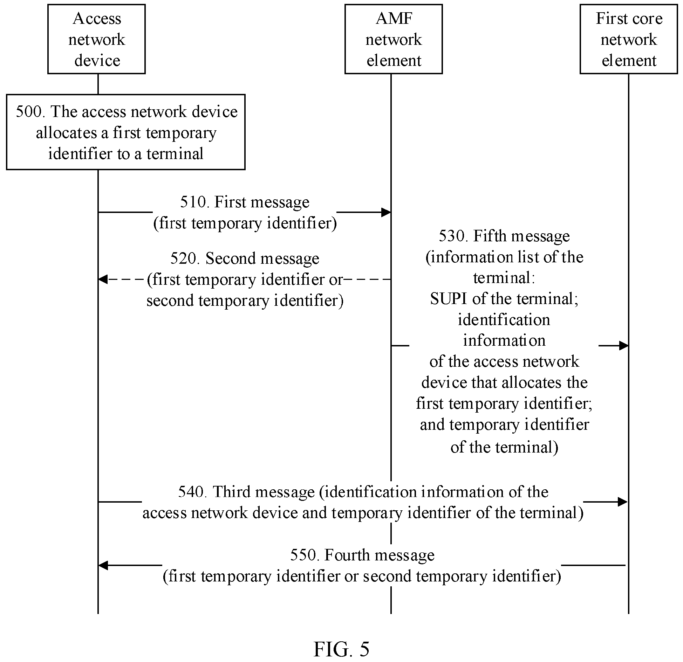

As shown in FIG. 5, an embodiment of this application provides a schematic flowchart. The schematic flowchart is a specific implementation of the schematic flowchart shown in FIG. 4, and includes the following steps.

Step 500: An access network device allocates a first temporary identifier to a terminal.

Step 510: The access network device sends a first message to an AMF network element, and the AMF network element receives the first message from the access network device, where the first message includes the first temporary identifier.

Step 520 (optional): The AMF network element sends a second message to the access network device, and the access network device receives the second message from the AMF network element.

For a specific implementation process of step 500 to step 520, refer to the descriptions of step 400 to step 420 in FIG. 4.

Step 530: The AMF network element sends a fifth message to a first core network element, and the first core network element receives the fifth message from the AMF network element.

In a possible implementation, the fifth message is used by the AMF network element to configure a correspondence between the first temporary identifier of the terminal and a SUPI of the terminal for the first core network element, and the fifth message is a configuration message associated with the terminal. The fifth message includes the first temporary identifier and the SUPI of the terminal. When receiving the fifth message, the first core network element obtains the first temporary identifier and the SUPI of the terminal from the fifth message. The first core network element establishes the correspondence between the first temporary identifier and the SUPI of the terminal.

Optionally, because the first temporary identifier is allocated by the access network device, the following case may occur: Different access network devices allocate a same temporary identifier to different terminals. In other words, the first temporary identifier may not uniquely identify one terminal. For unique identification of one terminal, the fifth message further includes identification information of the access network device that allocates the first temporary identifier. The correspondence that is established by the first core network element and that is between the first temporary identifier and the SUPI of the terminal is specifically a correspondence between the first temporary identifier, the identification information of the access network device that allocates the first temporary identifier, and the SUPI of the terminal. In this case, it is considered that the correspondence configured by the AMF network element for the first core network element by using the fifth message is specifically the correspondence between the first temporary identifier, the identification information of the access network device that allocates the first temporary identifier, and the SUPI of the terminal.

In another possible implementation, after the terminal succeeds in network security authentication, the AMF network element may further allocate a second temporary identifier to the terminal. For a process in which the AMF network element allocates the second temporary identifier to the terminal, refer to the descriptions in FIG. 4. The correspondence that is established by the first core network element and that is between the first temporary identifier and the SUPI of the terminal is specifically a correspondence between the first temporary identifier, the second temporary identifier, and the SUPI of the terminal. In this possible implementation, the fifth message includes at least the first temporary identifier and the SUPI of the terminal. The first core network element may determine, based on a stored temporary-identifier pair, the second temporary identifier corresponding to the first temporary identifier included in the fifth message, and further establish the correspondence between the first temporary identifier, the second temporary identifier, and the SUPI of the terminal. Alternatively, the fifth message further includes the second temporary identifier, and the first core network element may obtain the second temporary identifier from the fifth message. In this case, it is considered that the correspondence configured by the AMF network element for the first core network element by using the fifth message is specifically the correspondence between the first temporary identifier, the second temporary identifier, and the SUPI of the terminal.

Optionally, the correspondence that is established by the first core network element and that is between the first temporary identifier, the second temporary identifier, and the SUIPI of the terminal is specifically a correspondence between the first temporary identifier, the second temporary identifier, identification information of the access network device that allocates the first temporary identifier, and the SUPI of the terminal. Optionally, the fifth message further includes the identification information of the access network device that allocates the first temporary identifier. In this case, it is considered that the correspondence configured by the AMF network element for the first core network element by using the fifth message is specifically the correspondence between the first temporary identifier, the second temporary identifier, the identification information of the access network device that allocates the first temporary identifier, and the SUPI of the terminal.

For example, as shown in FIG. 5, the fifth message includes an information list of the terminal, and the information list of the terminal includes the SUPI of the terminal, the identification information of the access network device that allocates the first temporary identifier, and a temporary identifier of the terminal (for example, the first temporary identifier of the terminal, or the first temporary identifier and the second temporary identifier of the terminal).

Step 540: The access network device sends a third message to the first core network element, and the first core network element receives the third message from the access network device.

For example, the first core network element may be a core network element other than the AMF network element, for example, a UDM network element, an SMF network element, a PCF network element, an AUSF network element, or an LMF network element. An interface between the access network device and the first core network element may be Nx, and the third message may be an Nx message associated with the terminal. The third message includes the first temporary identifier. Whether the third message further includes other information is not limited. For example, the third message further includes the second temporary identifier, the identification information of the access network device, or the like.

In a possible implementation, when receiving the third message, the first core network element obtains the first temporary identifier from the third message. The first core network element determines the SUPI of the terminal based on the correspondence between the first temporary identifier and the SUPI of the terminal. Alternatively, further, the first core network element may further obtain the identification information of the access network device. For example, because the access network device communicates with the first core network element, the first core network element may obtain the identification information of the access network device, such as a URL address. Alternatively, the third message further includes the identification information of the access network device, and the first core network element may obtain the identification information of the access network device from the third message. The first core network element determines the SUPI of the terminal based on the correspondence between the first temporary identifier, the identification information of the access network device that allocates the first temporary identifier, and the SUPI of the terminal.

In another possible implementation, when receiving the third message, the first core network element obtains the first temporary identifier from the third message. Optionally, the third message further includes the second temporary identifier, and the first core network element obtains the second temporary identifier from the third message. Alternatively, the first core network element obtains, based on the stored temporary-identifier pair, the second temporary identifier corresponding to the first temporary identifier. The first core network element determines the SUPI of the terminal based on the correspondence between the first temporary identifier, the second temporary identifier, and the SUPI of the terminal. Alternatively, further, the first core network element further obtains the identification information of the access network device, and the first core network element determines the SUPI of the terminal based on the correspondence between the first temporary identifier, the second temporary identifier, the identification information of the access network device that allocates the first temporary identifier, and the SUPI of the terminal.

For example, as shown in FIG. 5, the third message includes the identification information of the access network device and a temporary identifier of the terminal. The temporary identifier may include the first temporary identifier, or the temporary identifier includes the first temporary identifier and the second temporary identifier.

After obtaining the SUPI of the terminal, the first core network element performs a corresponding operation on the terminal based on the SUPI of the terminal. For example, the first core network element is an LMF network element, and the access network device requests the LMF network element to perform positioning on the terminal. In this case, the third message may be a positioning request message associated with the terminal. When receiving the positioning request message, the LMF network element determines the SUPI of the terminal based on information included in the positioning request message, such as the first temporary identifier of the terminal. The LMF network element performs a positioning operation on the terminal corresponding to the SUPI, to obtain a positioning result. Further, the LMF network element may send the positioning result to the access network device. For example, a fourth message in the following step 550 may be a positioning response message, and the positioning response message includes the positioning result of the terminal. Further, for the access network device to identify the terminal corresponding to the positioning result, the positioning response message may further include information such as the first temporary identifier or the second temporary identifier of the terminal.

Step 550: The first core network element sends the fourth message to the access network device, and the access network device receives the fourth message from the first core network element.

For example, the fourth message is a response message for the third response, the fourth message may be an Nx message associated with the terminal, and the fourth message includes the first temporary identifier or the second temporary identifier. For example, the fourth message includes the first temporary identifier. Whether the fourth message includes other information is not limited. For example, the fourth message does not include other information, or the fourth message further includes the second temporary identifier. Alternatively, the fourth message includes the second temporary identifier. Whether the fourth message includes other information is not limited. For example, the fourth message does not include other information, or the fourth message further includes the first temporary identifier.

In a possible implementation, in a scenario in which one temporary identifier, namely, the first temporary identifier, is allocated to the terminal, the fourth message includes the first temporary identifier. When receiving the fourth message, the access network device may determine, based on the first temporary identifier included in the fourth message, the terminal specifically corresponding to the fourth message.

In another possible implementation, two temporary identifiers are allocated to the terminal, and the two temporary identifiers are respectively the first temporary identifier allocated by the access network device and the second temporary identifier allocated by the AMF network element. In a scenario in which the first temporary identifier is used for uplink communication and the second temporary identifier is used for downlink communication, the third message includes the first temporary identifier, and the fourth message includes the second temporary identifier. Alternatively, in an uplink and downlink communication scenario in which a temporary-identifier pair is used to identify the terminal, both the third message and the fourth message include the first temporary identifier and the second temporary identifier.

For example, the first temporary identifier is allocated by the access network device to the terminal, and the first temporary identifier may be represented as a terminal-access network device-specific temporary identifier. For example, the terminal is represented as UE, the access network device is represented as a CU, and the first temporary identifier is specifically a UE-CU-specific temporary identifier. The second temporary identifier is allocated by a core network element (the AMF network element) to the terminal, and the second temporary identifier is represented as a terminal-core network (CN)-specific temporary identifier. For example, the second temporary identifier is specifically a UE-CN-specific temporary identifier.

It may be understood that, in the scenario in FIG. 5, an example in which the access network device actively initiates communication is used. Alternatively, communication between the access network device and the first core network element may be actively initiated by the first core network element. For example, the first core network element obtains the SUPI of the terminal, and obtains a temporary identifier of the terminal based on a stored correspondence between the temporary identifier and the SUPI of the terminal. A message sent by the first core network element to the access network device includes the temporary identifier of the terminal. The temporary identifier may be the first temporary identifier, the second temporary identifier, the first temporary identifier and the second temporary identifier, or the like.

With the foregoing design, the AMF network element configures the correspondence between the temporary identifier of the terminal and the SUPI of the terminal for the first core network element. When receiving a message from the access network device, the first core network element may obtain the temporary identifier included in the message, and map the temporary identifier to the SUPI of the terminal. The first core network element may communicate with the access network device by using the temporary identifier of the terminal, and the first core network element may map the temporary identifier of the terminal to the SUPI of the terminal. This prevents the access network device from obtaining the SUPI of the terminal, thereby ensuring privacy and security of the terminal.

### [Another example]

When receiving the third message from the access network device, the first core network element may send, to the AMF network element, information included in the third message, such as the first temporary identifier. The AMF network element determines the SUPI of the terminal based on the stored correspondence, and sends the SUPI of the terminal to the first core network element. The first core network element may perform a corresponding operation based on the SUPI of the terminal.

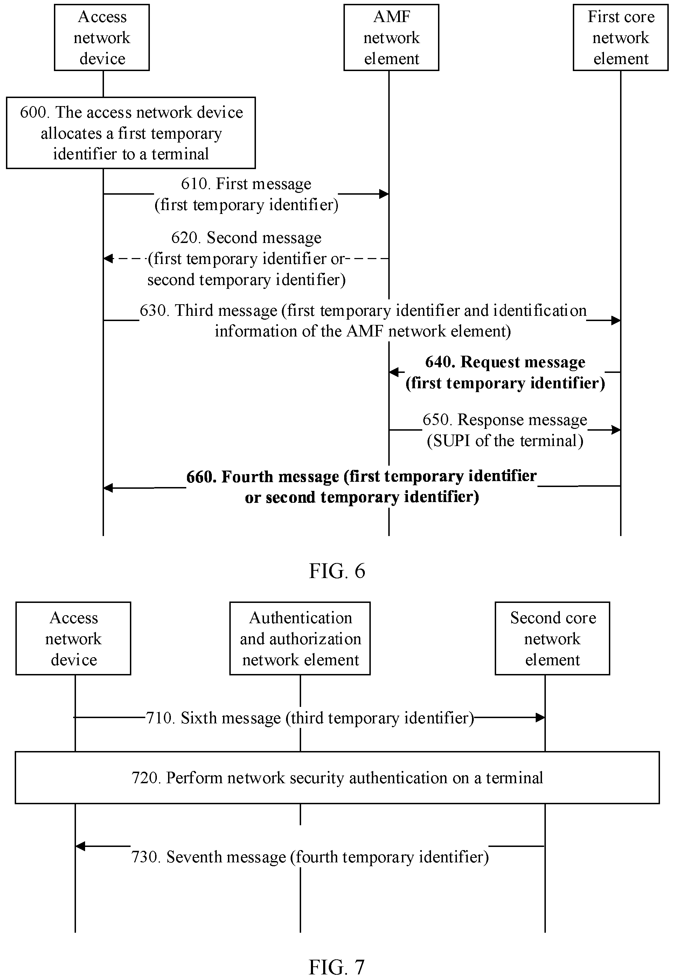

As shown in FIG. 6, an embodiment of this application provides a schematic flowchart. The schematic flowchart is a specific implementation of the schematic flowchart shown in FIG. 4, and includes the following steps.

Step 600: An access network device allocates a first temporary identifier to a terminal.

Step 610: The access network device sends a first message to an AMF network element, and the AMF network element receives the first message from the access network device, where the first message includes the first temporary identifier.

Step 620 (optional): The AMF network element sends a second message to the access network device, and the access network device receives the second message from the AMF network element.

For a specific implementation process of step 600 to step 620, refer to the descriptions of step 400 to step 420 in FIG. 4.

Step 630: The access network device sends a third message to the first core network element, and the first core network element receives the third message from the access network device.

For example, as shown in FIG. 6, the third message includes the first temporary identifier of the terminal and identification information of the AMF network element. For example, the identification information of the AMF network element may be an ID of the AMF network element, a URL address of the AMF network element, or the like. Whether the third message includes other information is not limited. For example, the third message further includes a second temporary identifier. The third message further includes identification information of the access network device and the like.

Step 640: The first core network element sends a request message to the AMF network element based on the identification information of the AMF network element, and the AMF network element receives the request message from the first core network element.

For example, the request message is used to request the AMF network element to retrieve a SUPI of the terminal, and the request message may be a retrieval request. The request message includes the first temporary identifier. Whether the request message includes other information is not limited. For example, the request message further includes the second temporary identifier. The request message further includes the identification information of the access network device that allocates the first temporary identifier. Because the access network device that sends the third message in step 630 is the access network device that allocates the first temporary identifier, the identification information of the access network device that allocates the first temporary identifier is the identification information of the access network device that sends the third message.

Step 650: The AMF network element sends a response message to the first core network element, and the first core network element receives the response message from the AMF network element.

For example, the response message includes the SUPI of the terminal. In a possible implementation, when receiving the request message, the AMF network element obtains the first temporary identifier from the request message. The AMF network element determines the SUPI of the terminal based on a stored correspondence between the first temporary identifier and the SUPI of the terminal. Alternatively, in another possible implementation, the request message further includes the identification information of the access network device. When receiving the request message, the AMF network element obtains the first temporary identifier and the identification information of the access network device from the request message. The AMF network element determines the SUPI of the terminal based on a stored correspondence between the first temporary identifier, the identification information of the access network device that allocates the first temporary identifier, and the SUPI of the terminal. Alternatively, in another possible implementation, when receiving the request message, the AMF network element obtains the second temporary identifier. For example, when obtaining the first temporary identifier from the request message, the AMF network element obtains, based on a stored temporary-identifier pair, the second temporary identifier corresponding to the first temporary identifier. Alternatively, the request message further includes the second temporary identifier, and the AMF network element obtains the second temporary identifier from the request message. The AMF network element determines the SUPI of the terminal based on a stored correspondence between the first temporary identifier, the second temporary identifier, and the SUPI of the terminal. Optionally, the request message further includes the identification information of the access network device. The AMF network element determines the SUPI of the terminal based on a stored correspondence between the first temporary identifier, the second temporary identifier, the identification information of the access network device that allocates the first temporary identifier, and the SUPI of the terminal. The AMF network element sends the response message including the SUPI of the terminal to the first core network element. When receiving the response message, the first core network element obtains the SUPI of the terminal from the response message, and performs a corresponding operation based on the SUPI of the terminal.

Step 660: The first core network element sends a fourth message to the access network device, and the access network device receives the fourth message from the first core network element.

For example, the fourth message may be a response message for the third message, and both the third message and the fourth message are information associated with the terminal. The fourth message may include the first temporary identifier, the second temporary identifier, or the like. Whether the fourth message includes other information is not limited.

It may be understood that, in the scenario in FIG. 6, an example in which the access network device actively initiates communication is used. Alternatively, communication between the access network device and the first core network element may be actively initiated by the first core network element. For example, the first core network element obtains the SUPI of the terminal, and sends the SUPI of the terminal to the AMF network element. The AMF network element maps the SUPI of the terminal to a temporary identifier of the terminal, and sends the temporary identifier of the terminal to the first core network element. A message sent by the first core network element to the access network device includes the temporary identifier of the terminal. The temporary identifier may be the first temporary identifier, the second temporary identifier, or the first temporary identifier and the second temporary identifier.

With the foregoing design, when receiving a message from the access network device, the first core network element may obtain a temporary identifier of the terminal from the message, and send the temporary identifier to the AMF network element, to request the SUPI, of the terminal, corresponding to the temporary identifier from the AMF network element. The AMF network element sends the SUPI of the terminal to the first core network element, so that the first core network element communicates with the access network device by using the temporary identifier of the terminal. This prevents the access network device from obtaining the SUPI of the terminal, thereby ensuring privacy and security of the terminal.

Embodiments of this application further provide a method and an apparatus for allocating a temporary identifier. In the method, when an access network device exchanges associated information of a terminal with a core network element for a 1^{st} time, the access network device allocates one temporary identifier to the terminal. The temporary identifier is used to identify the terminal in uplink communication. To be specific, the temporary identifier is used to identify the terminal in a message sent by the access network device to the core network element. After the terminal succeeds in network security authentication, the core network element allocates another temporary identifier to the terminal. The temporary identifier is used to identify the terminal in downlink communication. To be specific, the another temporary identifier is used to identify the terminal in a message sent by the core network element to the access network device.

As shown in FIG. 7, a schematic flowchart is provided, including the following steps.

Step 710: An access network device sends a sixth message to a second core network element, and the second core network element receives the sixth message from the access network device.

For example, the access network device may allocate a third temporary identifier to the terminal when exchanging associated information of the terminal with the second core network element for a 1^{st} time, where the sixth message includes the third temporary identifier. The third temporary identifier is used to identify the terminal in an uplink communication process. To be specific, the third temporary identifier is used to identify the terminal in a message sent by the access network device to the second core network element. The terminal is in an RRC connected state, an inactive state, or the like. This is not limited. Whether the sixth message further includes other information is not limited. An interface between the access network device and the second core network element is an Nx interface, and the sixth message and a seventh message may be referred to as Nx messages associated with the terminal.

Step 720: An authentication and authorization network element performs network security authentication on the terminal.

In a possible implementation, the authentication and authorization network element may be an identity function (ID function, IDF) network element of the terminal, a UDM network element and an AUSF network element, a newly defined network element, or the like. This is not limited. After authentication and authorization, validity of the terminal can be determined. If both authentication and authorization succeed, it is determined that the terminal is valid; or if at least one of authentication and authorization fails, it is determined that the terminal is invalid. When the terminal is valid, the second core network element may allocate a fourth temporary identifier to the terminal, and notify the access network device of the fourth temporary identifier by using a seventh message below. The fourth temporary identifier is used to identify the terminal in downlink communication. To be specific, the fourth temporary identifier is used to identify the terminal in a message sent by the second core network element to the access network device. Further, the second core network element requests a SUPI of the terminal from the AMF network element, and establishes and stores a correspondence between the third temporary identifier, the fourth temporary identifier, and the SUPI of the terminal. Further, the sixth message further includes identification information of the access network device that allocates the third temporary identifier. The second core network element may establish and store a correspondence between the third temporary identifier, the fourth temporary identifier, the identification information of the access network device that allocates the third temporary identifier, and the SUPI of the terminal. Alternatively, the second core network element may obtain the identification information of the access network device in another manner. For example, because the second core network element can communicate with the access network device, the second core network element may obtain the identification information of the access network device, such as a URL address. Alternatively, when the terminal is invalid, the procedure ends, and the third temporary identifier and the fourth temporary identifier are no longer activated. In other words, in embodiments of this application, the third temporary identifier and the fourth temporary identifier are activated only when the terminal succeeds in network security authentication and is valid. Optionally, "authentication and authorization" in embodiments of this application may be a conventional "authentication and authorization" procedure, a simplified "authentication and authorization" procedure, or the like. This is not limited.

Step 730: The second core network element sends the seventh message to the access network device, and the access network device receives the seventh message from the second core network element.

For example, the seventh message includes the fourth temporary identifier. Whether the seventh message further includes other information is not limited. For example, the seventh message further includes the third temporary identifier. In a possible implementation, the third temporary identifier is allocated by the access network device, and is used to identify the terminal in a message sent by the access network device to the second core network element. The terminal is represented as UE, the access network device is represented as a CU, the second core network element is represented as an NFx, and the third temporary identifier is represented as a UE-CU-NFx-specific temporary identifier. The fourth temporary identifier is allocated by the second core network element, and is used to identify the terminal in a message sent by the second core network element to the access network device. The fourth temporary identifier is represented as a UE-NFx-CU-specific temporary identifier.

In a possible implementation, the second core network element may be a network element other than the AMF network element. An application scenario in embodiments of this application may be as follows: The access network device accesses the second core network element in one hop. In other words, the access network device can directly communicate with the second core network element without forwarding by the AMF network element. Certainly, the solutions in embodiments of this application may be further applied to another scenario in addition to the foregoing scenario. This is not limited. After the interaction in step 710 to step 730, both the access network device and the second core network element can obtain the third temporary identifier and the fourth temporary identifier of the terminal. Then, the access network device may communicate with the second core network element based on the third temporary identifier and the fourth temporary identifier. It may be understood that, as described above, the third temporary identifier is used to identify the terminal in an uplink communication process, and the fourth temporary identifier is used to identify the terminal in a downlink communication process. Whether the third temporary identifier and the fourth temporary identifier are used for other purposes is not limited. For example, the third temporary identifier may also identify the terminal in the downlink communication process, and the fourth temporary identifier may also identify the terminal in the uplink communication process. For example, the third temporary identifier and the fourth temporary identifier form a temporary-identifier pair, and the temporary-identifier pair identifies the terminal in both the uplink communication process and the downlink communication process. For example, in the uplink communication process, the access network device sends an eighth message to the second core network element, where the eighth message includes the third temporary identifier and the fourth temporary identifier. The second core network element determines the SUPI of the terminal based on the correspondence between the third temporary identifier, the fourth temporary identifier, and the SUPI of the terminal, and performs a corresponding operation based on the SUPI of the terminal. The second core network element sends a ninth message to the access network device, where the ninth message includes the third temporary identifier, the fourth temporary identifier, and the like.

For example, "third temporary identifier and fourth temporary identifier" in embodiments of this application is valid in a validity area. The validity area may be a PLMN, an RA, a TA, or the like of the terminal. A PLMN is used as an example. To be specific, "third temporary identifier and fourth temporary identifier" can identify the terminal within a PLMN range of the terminal, and becomes invalid and can no longer identify the terminal outside the PLMN range of the terminal.

With the foregoing design, the access network device allocates the third temporary identifier to the terminal, the second core network element allocates the fourth temporary identifier to the terminal, and the access network device communicates with the second core network element based on the third temporary identifier and the fourth temporary identifier. This can prevent the access network device from obtaining the SUPI of the terminal, thereby ensuring privacy and security of the terminal.

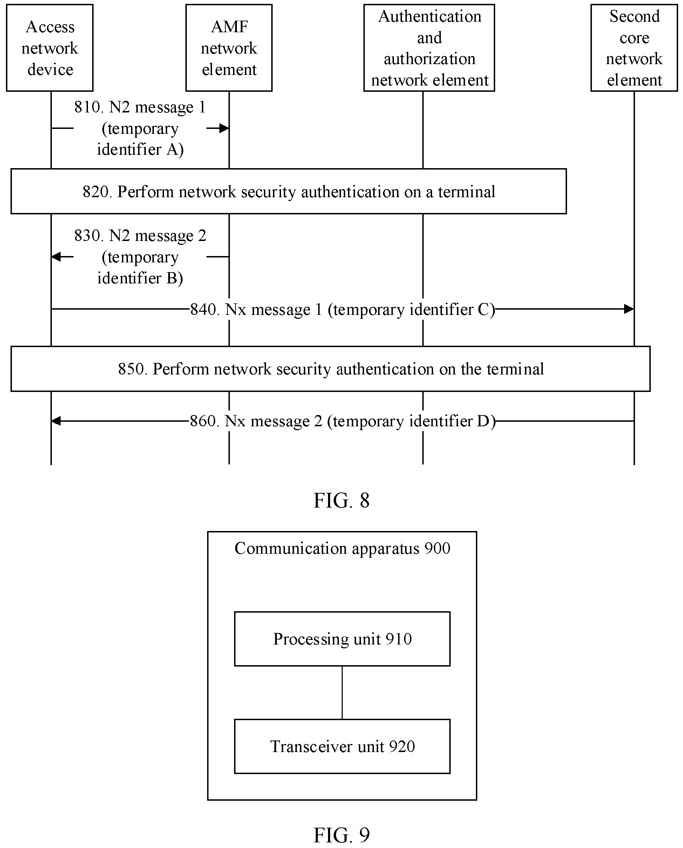

As shown in FIG. 8, an embodiment of this application further provides a schematic flowchart. The schematic flowchart is a specific implementation of the schematic flowchart shown in FIG. 7, and includes the following steps.

Step 810: An access network device sends an N2 message 1 to an AMF network element, and the AMF network element receives an N2 message 2 from the access network device.

For example, an interface between the access network device and the AMF network element is an N2 interface, and a message exchanged between the access network device and the AMF network element is described as an N2 message. When the access network device exchanges associated information of a terminal with the AMF network element for a 1^{st} time, the access network device allocates a temporary identifier A to the terminal. The temporary identifier A may be represented as a UE-access network device-AMF network element-specific temporary identifier. The N2 message 1 includes the temporary identifier A.

Step 820: An authentication and authorization network element performs network security authentication on the terminal.

In a possible implementation, after the terminal succeeds in the network security authentication, the AMF network element allocates another temporary identifier B to the terminal. The temporary identifier B may be represented as a UE-AMF network element-access network device-specific temporary identifier. The temporary identifier allocated by the access network device and the temporary identifier allocated by the AMF network element may form a temporary-identifier pair. To be specific, the temporary identifier A and the temporary identifier B form a temporary-identifier pair. The AMF network element obtains a SUPI of the terminal from a UDM network element. The AMF network element establishes and stores a correspondence between the temporary identifier A, the temporary identifier B, and the SUPI of the terminal.

Step 830: The AMF network element sends an N2 message 2 to the access network device, and the access network device receives the N2 message 2 from the AMF network element.

For example, the N2 message 2 is a response message for the N2 message 1, and the N2 message 2 includes the temporary identifier B. Optionally, the N2 message 2 further includes the temporary identifier A. The AMF network element may communicate with the access network device based on the temporary identifier A and the temporary identifier B.

Step 840: The access network device sends an Nx message 1 to a second core network element, and the second core network element receives the Nx message 1 from the access network device.

For example, an interface between the access network device and the second core network element is an Nx interface, and a message exchanged between the access network device and the second core network element is referred to as an Nx message. When the access network device exchanges associated information of the terminal with the second core network element for a 1^{st} time, the access network device allocates a temporary identifier C to the terminal. The temporary identifier C may be represented as a UE-access network device-second core network element-specific temporary identifier. The Nx message 1 includes the temporary identifier C.

Step 850: The authentication and authorization network element performs network security authentication on the terminal.

In a possible implementation, the authentication and authorization network element may perform simplified network security authentication on the terminal. After the network security authentication succeeds, the second core network element allocates a temporary identifier D to the terminal. The temporary identifier D may be represented as a UE-second core network element-access network device-specific temporary identifier. The temporary identifier C and the temporary identifier D form a pair of temporary identifiers. The second core network element may be a network element other than the AMF network element, and the second core network element may obtain the SUPI of the terminal from the AMF network element. The second core network element establishes and stores a correspondence between the temporary identifier C, the temporary identifier D, and the SUPI of the terminal.

Step 860: The second core network element sends an Nx message 2 to the access network device, and the access network device receives the Nx message 2 from the second core network element.

For example, the Nx message 2 includes the temporary identifier D. Optionally, the Nx message 2 further includes the temporary identifier C. The second core network element may communicate with the access network device based on the temporary identifier C and the temporary identifier D. It may be understood that the Nx message 1 and the Nx message in embodiments of this application are specific implementations of the sixth message and the seventh message in the procedure in FIG. 7. The temporary identifier C and the temporary identifier D are specific implementations of the third temporary identifier and the fourth temporary identifier in the procedure in FIG. 7.

With the foregoing design, the access network device may communicate with the second core network element based on the allocated temporary identifiers. This can prevent the access network device from obtaining the SUPI of the terminal, thereby ensuring privacy and security of the terminal.

It may be understood that, in embodiments of this application:
1. The description focuses on differences between different procedures, and descriptions of different procedures may refer to one another.
2. In each procedure, a sequence of different steps is not limited. For example, step 530 in FIG. 5 may be performed after step 520, or step 530 may be performed before step 520. In addition, each procedure may include fewer steps or more steps than those shown in the schematic flowchart or the text description.
3. In the procedures in FIG. 4 to FIG. 8, description is provided by using an example in which the access network device, the AMF network element, a core network element, or the like is used as an execution body. It may be understood that, in each procedure, functions of the access network device may be implemented by the access network device, or may be implemented by a module (for example, a chip or a circuit) in the access network device, or may be implemented by a logical node, a logical module, or software that can implement all or some of the functions of the access network device. Functions of the AMF network element or a core network element may be implemented by the AMF network element or the core network element, or may be implemented by a module (for example, a chip or a circuit) in the AMF network element or the core network element.
4. In embodiments of this application, "(for example, the AMF network element) receiving information (for example, from the access network device)" may be understood as follows: A source end of the information is the AMF network element, and a destination end of the information is the access network device. This may include: The AMF network element directly or indirectly receives the information from the access network device. Necessary processing, for example, a format change, may be performed on the information between the source end and the destination end to which the information is sent, but the destination end can understand valid information from the source end. A similar expression in this application may be understood similarly, and details are not described herein again.

In the foregoing embodiments provided in this application, the methods provided in the embodiments of this application are described respectively from perspectives of interaction between the access network device, the AMF network element, and a core network element. To implement functions in the methods provided in the embodiments of this application, the access network device, the AMF network element, the core network element, or the like may include a hardware structure and/or a software module, and implement the functions in a form of a hardware structure, a software module, or a combination of a hardware structure and a software module. Whether a function in the foregoing functions is performed by using the hardware structure, the software module, or the combination of the hardware structure and the software module depends on design constraints of particular applications of the technical solutions.

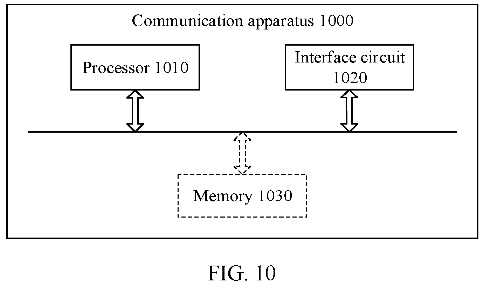

FIG. 9 and FIG. 10 each are a diagram of a structure of a possible communication apparatus according to an embodiment of this application. These communication apparatuses may implement one or more corresponding functions in the foregoing method embodiments, for example, a function implemented by the access network device, the AMF network element, the core network element, or the like. Therefore, beneficial effects of the foregoing method embodiments may be implemented. In embodiments of this application, the communication apparatus may be the access network device in the RAN 200 shown in FIG. 1, or a core network element in the core network 300, or a module (for example, a chip) applied to the access network device or the core network element.

As shown in FIG. 9, a communication apparatus 900 includes a processing unit 910 and a transceiver unit 920. The communication apparatus 900 is configured to implement functions of the access network device, the AMF network element, or a core network element in the method embodiment shown in any one of FIG. 4 to FIG. 8.

Optionally, the transceiver unit 920 may also be referred to as an output unit, an interface unit, a communication unit, or the like. In a possible implementation, the transceiver unit 920 includes at least one of a sending unit or a receiving unit. The sending unit and the receiving unit may be integrated together, or may be two independent units, or the like.

When the communication apparatus 900 is configured to implement functions of the access network device in FIG. 4 to FIG. 6, specifically:
the processing unit 910 is configured to allocate a first temporary identifier to a terminal; and the transceiver unit 920 is configured to send a first message to an access and mobility management function network element, where the first message includes the first temporary identifier, and the first temporary identifier is used to identify the terminal in a message sent by the access network device to a first core network element.

In a possible design, the first temporary identifier is further used to identify the terminal in a message sent by the first core network element to the access network device.

In a possible design, the following is further included: the transceiver unit 920 is further configured to receive a second message from the access and mobility management function network element, where the second message includes a second temporary identifier of the terminal, and the second temporary identifier is used to identify the terminal in a message sent by the first core network element to the access network device.

In a possible design, the following is further included: the transceiver unit 920 is further configured to send a third message to the first core network element, where the third message includes the first temporary identifier; and receive a fourth message from the first core network element, where the fourth message includes the first temporary identifier or the second temporary identifier.

In a possible design, the third message further includes identification information of the access and mobility management function network element.

When the communication apparatus 900 is configured to implement functions of the AMF network element in FIG. 4 to FIG. 6, specifically:
the transceiver unit 920 is configured to receive a first message from an access network device, where the first message includes a first temporary identifier of a terminal, and the first temporary identifier is used to identify the terminal in a message sent by the access network device to a first core network element.

In a possible design, the first temporary identifier is further used to identify the terminal in a message sent by the first core network element to the access network device.

In a possible design, the processing unit 910 is configured to allocate a second temporary identifier to the terminal, where the second temporary identifier is used to identify the terminal in a message sent by the first core network element to the access network device; and the transceiver unit 920 is further configured to send a second message to the access network device, where the second message includes the second temporary identifier.

In a possible design, the transceiver unit 920 is further configured to send a fifth message to the first core network element, where the fifth message includes a subscription permanent identifier SUPI of the terminal and the first temporary identifier.

In a possible design, the fifth message further includes the second temporary identifier.

In a possible design, the fifth message further includes the identification information of the access network device that allocates the first temporary identifier.

In a possible design, the following is further included: the transceiver unit 920 is further configured to receive a request message from the first core network element, where the request message includes the first temporary identifier; the processing unit 910 is further configured to determine a SUPI of the terminal based on a correspondence between the first temporary identifier and the SUPI of the terminal; and the transceiver unit 920 is further configured to send a response message to the first core network element, where the response message includes the SUPI of the terminal.

In a possible design, the correspondence between the first temporary identifier and the SUPI of the terminal includes a correspondence between the first temporary identifier, identification information of the access network device that allocates the first temporary identifier, and the SUPI of the terminal.

In a possible design, the request message further includes the identification information of the access network device that allocates the first temporary identifier.

In a possible design, the correspondence between the first temporary identifier and the SUPI of the terminal includes a correspondence between the first temporary identifier, the second temporary identifier, and the SUPI of the terminal.

In a possible design, the request message further includes the second temporary identifier.

In a possible design, the correspondence between the first temporary identifier, the second temporary identifier, and the SUPI of the terminal includes: a correspondence between the first temporary identifier, the second temporary identifier, identification information of the access network device that allocates the first temporary identifier, and the SUPI of the terminal.

In a possible design, the request message further includes the identification information of the access network device that allocates the first temporary identifier.

When the communication apparatus 900 is configured to implement functions of the first core network element in FIG. 5 or FIG. 6, specifically:
the transceiver unit 920 is configured to receive a third message from an access network device, where the third message includes a first temporary identifier of a terminal, and the first temporary identifier is used to identify the terminal in a message sent by the access network device to the first core network element; the processing unit 910 is configured to generate a fourth message; and the transceiver unit 920 is further configured to send the fourth message to the access network device, where the fourth message includes the first temporary identifier or a second temporary identifier.

In a possible design, when the fourth message includes the first temporary identifier, the first temporary identifier is further used to identify the terminal in a message sent by the access network device to the first core network element.

In a possible design, when the fourth message includes the second temporary identifier, the second temporary identifier is used to identify the terminal in a message sent by the first core network element to the access network device.

In a possible design, the processing unit 910 is further configured to determine a subscription permanent identifier SUPI of the terminal based on a correspondence between the first temporary identifier and the SUPI of the terminal.

In a possible design, the transceiver unit 920 is further configured to receive a fifth message from an access and mobility management function network element, where the fifth message includes the SUPI of the terminal and the first temporary identifier; and the processing unit 910 is configured to determine the correspondence between the first temporary identifier and the SUPI of the terminal.

In a possible design, the correspondence between the first temporary identifier and the SUPI of the terminal includes a correspondence between the first temporary identifier, identification information of the access network device that allocates the first temporary identifier, and the SUPI of the terminal.

In a possible design, the fifth message further includes the identification information of the access network device that allocates the first temporary identifier.

In a possible design, the correspondence between the first temporary identifier and the SUPI of the terminal includes a correspondence between the first temporary identifier, the second temporary identifier, and the SUPI of the terminal.

In a possible design, the fifth message further includes the second temporary identifier.

In a possible design, the correspondence between the first temporary identifier, the second temporary identifier, and the SUPI of the terminal includes: a correspondence between the first temporary identifier, the second temporary identifier, identification information of the access network device that allocates the first temporary identifier, and the SUPI of the terminal.

In a possible design, the fifth message further includes the identification information of the access network device that allocates the first temporary identifier.

In a possible design, the third message further includes identification information of an access and mobility management function network element, the processing unit 910 is further configured to send a request message to the access and mobility management function network element based on the identification information of the access and mobility management function network element, where the request message includes the first temporary identifier; and the transceiver unit 920 is further configured to receive a response message from the access and mobility management function network element, where the response message includes a SUPI of the terminal.

In a possible design, the request message further includes identification information of the access network device that allocates the first temporary identifier.

In a possible design, the response message further includes the first temporary identifier of the terminal.

In a possible design, the request message and the response message further include the second temporary identifier.

When the communication apparatus 900 is configured to implement functions of the second core network element in FIG. 7 or FIG. 8, specifically:
the transceiver unit 920 is configured to receive a sixth message from an access network device, where the sixth message includes a third temporary identifier of a terminal, and the third temporary identifier is used to identify the terminal in a message sent by the access network device to the second core network element; the processing unit 910 is configured to generate a seventh message; and the transceiver unit 920 is further configured to send the seventh message to the access network device after the terminal succeeds in network security authentication, where the seventh message includes a fourth temporary identifier, and the fourth temporary identifier is used to identify the terminal in a message sent by the second core network element to the access network device.

When the communication apparatus 900 is configured to implement functions of the access network device in FIG. 7 and FIG. 8, specifically:
the processing unit 910 is configured to generate a sixth message; the transceiver unit 920 is configured to send the sixth message to a second core network element, where the sixth message includes a third temporary identifier of a terminal, and the third temporary identifier is used to identify the terminal in a message sent by the access network device to the second core network element; and the transceiver unit 920 is further configured to receive a seventh message from the second core network element after the terminal succeeds in network security authentication, where the seventh message includes a fourth temporary identifier, and the fourth temporary identifier is used to identify the terminal in a message sent by the second core network element to the access network device.

For more detailed descriptions of the processing unit 910 and the transceiver unit 920, refer to the descriptions of FIG. 4 to FIG. 8 in the foregoing method embodiments. Details are not described herein again.

It may be understood that, in embodiments of this application, division into the units is an example, and is merely a logical function division. In actual implementation, another division manner may be used. In addition, functional units in the embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions to be executed by the processor 1010, or store input data required by the processor 1010 to run the instructions, or store data generated after the processor 1010 runs the instructions.

When the communication apparatus 1000 is configured to implement the methods shown in FIG. 4 to FIG. 8, the processor 1010 is configured to implement functions of the processing unit 910, and the interface circuit 1020 is configured to implement functions of the transceiver unit 920.

When the communication apparatus is a module used in an access network device, the module implements functions of the access network device in the foregoing method embodiments. The module receives information from another module (for example, a radio frequency module or an antenna) in the access network device, and the information is sent by a terminal to the access network device. Alternatively, the module sends information to another module (for example, a radio frequency module or an antenna) in the access network device, and the information is sent by the access network device to a terminal.

When the communication apparatus is a module used in a core network element (for example, an AMF network element, a first core network element, or a second core network element), the module implements functions of the core network element in the foregoing method embodiments. The module receives information from another module (for example, a radio frequency module or an antenna) in the core network element, and the information is sent by a terminal to the core network element. Alternatively, the module sends information to another module (for example, a radio frequency module or an antenna) in the core network element, and the information is sent by the core network element to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The memory in embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, an example storage medium is coupled to a processor, so that the processor can read information from the storage medium and write information to the storage medium. The storage medium may alternatively be a constituent part of the processor. The processor and the storage medium may be disposed in an ASIC.

An embodiment of this application further provides a communication apparatus. The communication apparatus includes a processor and a memory. The processor is coupled to the memory. The processor is configured to implement functions of the access network device, the AMF network element, or the first core network element in FIG. 4 to FIG. 6, or is configured to implement functions of the access network device or the second core network element in FIG. 7 or FIG. 8.

An embodiment of this application further provides a communication apparatus, including a processor. The processor is configured to implement functions of the access network device, the AMF network element, or the first core network element in FIG. 4 to FIG. 6, or is configured to implement functions of the access network device or the second core network element in FIG. 7 or FIG. 8.

An embodiment of this application further provides a computer-readable storage medium. The computer-readable storage medium stores instructions, and the instructions may also be referred to as a computer program, computer program code, or the like. The instructions run on a computer, so that the computer performs functions of the access network device, the AMF network element, or the first core network element in FIG. 4 to FIG. 6 in the foregoing method embodiments, or functions of the access network device or the second core network element in FIG. 7 or FIG. 8 in the foregoing method embodiments.

An embodiment of this application further provides a computer program product, including a computer program or instructions. When the computer program or the instructions run on a computer, functions of the access network device, the AMF network element, or the first core network element in FIG. 4 to FIG. 6 are implemented, or functions of the access network device or the second core network element in FIG. 7 or FIG. 8 are implemented.

An embodiment of this application further provides a chip. The chip includes a processor. The processor is coupled to a memory. The processor is configured to execute a computer program or instructions stored in the memory, so that functions of the access network device, the AMF network element, or the first core network element in FIG. 4 to FIG. 6 are implemented, or functions of the access network device or the second core network element in FIG. 7 or FIG. 8 are implemented.

An embodiment of this application further provides a communication system, including a first communication apparatus and a second communication apparatus.

The first communication apparatus and the second communication apparatus may be respectively configured to implement functions of the access network device and the AMF network element in FIG. 4 to FIG. 6. Further, the communication system further includes a third communication apparatus, configured to implement functions of the first core network element in FIG. 5 or FIG. 6, or the first communication apparatus and the second communication apparatus are respectively configured to implement functions of the access network device and the second core network element in FIG. 7 or FIG. 8.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, some or all of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A method for allocating a temporary identifier to a terminal, wherein the method is applied to an access network device and comprises:
allocating a first temporary identifier to a terminal; and
sending a first message to an access and mobility management function network element, wherein the first message comprises the first temporary identifier, and the first temporary identifier is used to identify the terminal in a message sent by the access network device to a first core network element.

2. The method according to claim 1, wherein the first temporary identifier is further used to identify the terminal in a message sent by the first core network element to the access network device.

3. The method according to claim 1, further comprising:
receiving a second message from the access and mobility management function network element, wherein the second message comprises a second temporary identifier of the terminal, and the second temporary identifier is used to identify the terminal in a message sent by the first core network element to the access network device.

4. The method according to any one of claims 1 to 3, further comprising:
sending a third message to the first core network element, wherein the third message comprises the first temporary identifier; and
receiving a fourth message from the first core network element, wherein the fourth message comprises the first temporary identifier or the second temporary identifier.

5. The method according to claim 4, wherein the third message further comprises identification information of the access and mobility management function network element.

6. A method for allocating a temporary identifier to a terminal, wherein the method is applied to an access and mobility management function network element and comprises:
receiving a first message from an access network device, wherein the first message comprises a first temporary identifier of a terminal, and the first temporary identifier is used to identify the terminal in a message sent by the access network device to a first core network element.

7. The method according to claim 6, wherein the first temporary identifier is further used to identify the terminal in a message sent by the first core network element to the access network device.

8. The method according to claim 6, further comprising:
allocating a second temporary identifier to the terminal, wherein the second temporary identifier is used to identify the terminal in a message sent by the first core network element to the access network device; and
sending a second message to the access network device, wherein the second message comprises the second temporary identifier.

9. The method according to any one of claims 6 to 8, further comprising:
sending a fifth message to the first core network element, wherein the fifth message comprises a subscription permanent identifier SUPI of the terminal and the first temporary identifier.

10. The method according to claim 9, wherein the fifth message further comprises the second temporary identifier.

11. The method according to claim 9 or 10, wherein the fifth message further comprises identification information of the access network device that allocates the first temporary identifier.

12. The method according to any one of claims 6 to 8, further comprising:
receiving a request message from the first core network element, wherein the request message comprises the first temporary identifier;
determining a SUPI of the terminal based on a correspondence between the first temporary identifier and the SUPI of the terminal; and
sending a response message to the first core network element, wherein the response message comprises the SUPI of the terminal.

13. The method according to claim 12, wherein the correspondence between the first temporary identifier and the SUPI of the terminal comprises a correspondence between the first temporary identifier, the identification information of the access network device that allocates the first temporary identifier, and the SUPI of the terminal.

14. The method according to claim 13, wherein the request message further comprises the identification information of the access network device that allocates the first temporary identifier.

15. The method according to claim 12, wherein the correspondence between the first temporary identifier and the SUPI of the terminal comprises a correspondence between the first temporary identifier, the second temporary identifier, and the SUPI of the terminal.

16. The method according to claim 15, wherein the request message further comprises the second temporary identifier.

17. The method according to claim 15 or 16, wherein the correspondence between the first temporary identifier, the second temporary identifier, and the SUPI of the terminal comprises:
a correspondence between the first temporary identifier, the second temporary identifier, identification information of the access network device that allocates the first temporary identifier, and the SUPI of the terminal.

18. The method according to claim 17, wherein the request message further comprises the identification information of the access network device that allocates the first temporary identifier.

19. A communication method, wherein the method is applied to a first core network element and comprises:
receiving a third message from an access network device, wherein the third message comprises a first temporary identifier of a terminal, and the first temporary identifier is used to identify the terminal in a message sent by the access network device to the first core network element; and
sending a fourth message to the access network device, wherein the fourth message comprises the first temporary identifier or a second temporary identifier.

20. The method according to claim 19, wherein when the fourth message comprises the first temporary identifier, the first temporary identifier is further used to identify the terminal in a message sent by the access network device to the first core network element.

21. The method according to claim 19, wherein when the fourth message comprises the second temporary identifier, the second temporary identifier is used to identify the terminal in a message sent by the first core network element to the access network device.

22. The method according to any one of claims 19 to 21, further comprising:
determining a subscription permanent identifier SUPI of the terminal based on a correspondence between the first temporary identifier and the SUPI of the terminal.

23. The method according to claim 22, further comprising:
receiving a fifth message from an access and mobility management function network element, wherein the fifth message comprises the SUPI of the terminal and the first temporary identifier; and
determining the correspondence between the first temporary identifier and the SUPI of the terminal.

24. The method according to claim 22 or 23, wherein the correspondence between the first temporary identifier and the SUPI of the terminal comprises a correspondence between the first temporary identifier, identification information of the access network device that allocates the first temporary identifier, and the SUPI of the terminal.

25. The method according to claim 24, wherein the fifth message further comprises the identification information of the access network device that allocates the first temporary identifier.

26. The method according to claim 22 or 23, wherein the correspondence between the first temporary identifier and the SUPI of the terminal comprises a correspondence between the first temporary identifier, the second temporary identifier, and the SUPI of the terminal.

27. The method according to claim 26, wherein the fifth message further comprises the second temporary identifier.

28. The method according to claim 26 or 27, wherein the correspondence between the first temporary identifier, the second temporary identifier, and the SUPI of the terminal comprises:
a correspondence between the first temporary identifier, the second temporary identifier, identification information of the access network device that allocates the first temporary identifier, and the SUPI of the terminal.

29. The method according to claim 28, wherein the fifth message further comprises the identification information of the access network device that allocates the first temporary identifier.

30. The method according to any one of claims 19 to 21, wherein the third message further comprises identification information of an access and mobility management function network element, and the method further comprises:
sending a request message to the access and mobility management function network element based on the identification information of the access and mobility management function network element, wherein the request message comprises the first temporary identifier; and
receiving a response message from the access and mobility management function network element, wherein the response message comprises a SUPI of the terminal.

31. The method according to claim 30, wherein the request message further comprises identification information of the access network device that allocates the first temporary identifier.

32. The method according to claim 30 or 31, wherein the response message further comprises the first temporary identifier of the terminal.

33. The method according to any one of claims 30 to 32, wherein the request message and the response message further comprise the second temporary identifier.

34. A communication apparatus, comprising a unit configured to implement the method according to any one of claims 1 to 5, a unit configured to implement the method according to any one of claims 6 to 18, or a unit configured to implement the method according to any one of claims 19 to 33.

35. A communication apparatus, comprising a processor, wherein the processor is coupled to a memory, and the processor is configured to execute instructions, so that the apparatus performs the method according to any one of claims 1 to 5, the method according to any one of claims 6 to 18, or the method according to any one of claims 19 to 33.

36. A computer-readable storage medium, wherein the computer-readable storage medium stores instructions, and the instructions are run on a computer, so that the computer performs the method according to any one of claims 1 to 5, the method according to any one of claims 6 to 18, or the method according to any one of claims 19 to 33.
